Europäisches Patentamt

European Patent Office

Office européen des brevets

(19)

(11) Veröffentlichungsnummer: **0 068 478**
**A1**

(12) ## EUROPÄISCHE PATENTANMELDUNG

(21) Anmeldenummer: 82105715.5

(22) Anmeldetag: 25.06.82

(51) Int. Cl.³: **G 05 D 23/12**

(30) Priorität: 26.06.81 DE 3125051

(43) Veröffentlichungstag der Anmeldung: 05.01.83
Patentblatt 83/1

(84) Benannte Vertragsstaaten: **AT BE CH DE FR LI LU NL SE**

(71) Anmelder: **Peter-Uhren GmbH,**
**Postfach 148 Neckarstrasse 60, D-7210 Rottweil (DE)**

(72) Erfinder: **Hoehne, Klaus, Dr. Dipl.Phys.,**
**Neckarstrasse 60, D-7210 Rottweil (DE)**

(74) Vertreter: **Weickmann, Heinrich, Dipl.-Ing.,**
**Postfach 860 820 Möhlstrasse 22,**
**D-8000 München 86 (DE)**

(54) **System zur Regelung und Registrierung von Heizenergie.**

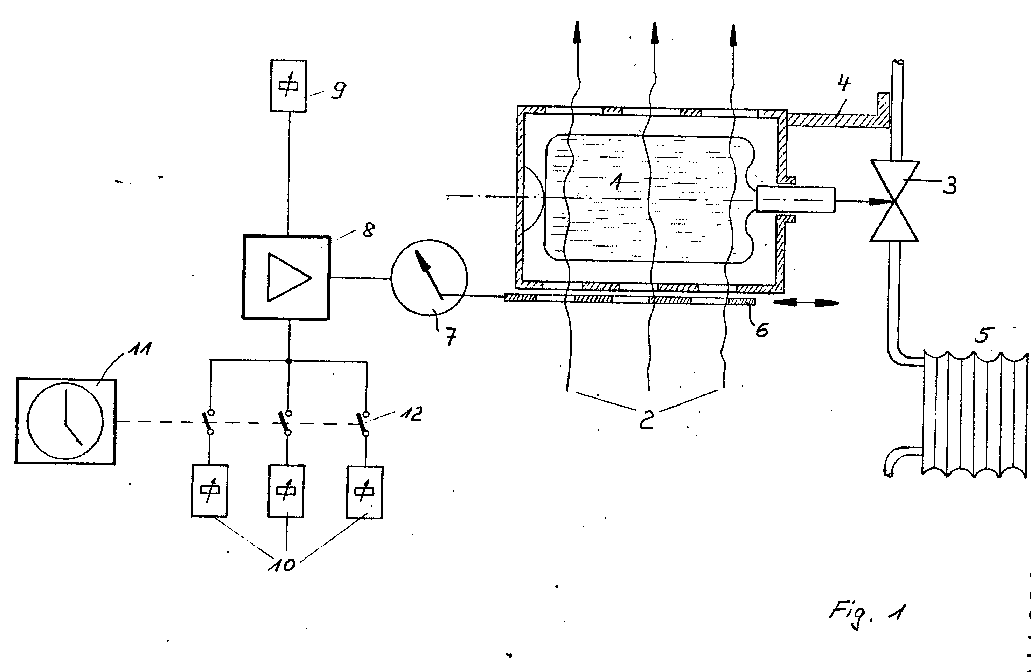

(57) Die Erfindung betrifft ein System zur Regelung und Registrierung von Wärmemengen, wobei die wesentliche Steuerenergie aus der Temperaturdifferenz des heissen Heizmediums und der kälteren Raumluft gewonnen wird. Nach Fig. 1 erfolgt die Aufheizung des Ventilsteuerkörpers (1) über den Wärmeleitsteg (4) und die gesteuerte Abkühlung durch die Raumluft (2) und das Schiebersystem (6). Die Wärmemengenregistrierung kann mit der Quarzschaltuhr zusammen erfolgen.

0068478

Die Erfindung betrifft ein Verfahren zur Regelung der Heizenergie.

Mit den bekannten Regelventilen an Radiatoren kann eine eingestellte Raumtemperatur konstant gehalten werden. Diese Ventile arbeiten derart, daß der Schieber des Ventils mit einem Ausdehnungskörper verbunden ist. Dem Ausdehnungskörper wird durch einen Temperaturvorwähler eine mechanische Vorspannung gegeben. Der Ausdehnungskörper nimmt die Temperatur des zu regelnden Raumes an und regelt durch die entsprechende Ausdehnung die Durchflußmenge des Warmwasserventils.

Mit derartigen Ventilen ist eine zeitabhängige Temperatursteuerung direkt nicht möglich. Sie arbeiten z.B. der Absenkung der Warmwassertemperatur (Nachtabsenkung) entgegen.

Einige Verfahren umgehen diesen Nachteil, indem heizbare elektrische Widerstände unter dem Ausdehnungskörper angebracht werden. Über eine Schaltuhr werden die Widerstände entsprechend eines gewünschten Temperaturverlaufs aufgeheizt. Damit wird dem bekannten Heizkörperregelventil eine unterschiedliche Raumtemperatur simuliert. Nachteil dieser Verfahren ist, daß Energie benötigt wird, die nur durch eine Verkabelung an das Ventil herangeführt werden kann.

Der Erfindung liegt die Aufgabe zugrunde, eine Regelung auszuführen, die mit geringer Energie auskommt, welche von einer Knopfbatterie - ähnlich derer für Uhren - geliefert wird. Hierbei wird davon ausgegangen, daß lediglich die Regelung mit Batteriestrom arbeitet, dagegen die Verstellung des Ventils durch die Energie bewirkt wird, die aus der Temperaturdifferenz zwischen dem Heißwasserzulauf und der Raumtemperatur entsteht.

Das in Fig. 1 dargestellte System funktioniert wie folgt:

Das Heizkörperventil (3) steuert den Heißwasserzulauf zum Radiator (5). Ein Ausdehnungskörper (1) ist mit dem Schieber des Ventils verbunden. Die Raumluft (2) durchdringt das Gehäuse des Ausdehnungskörpers und bringt diesen auf Raumtemperatur. Das Gehäuse des Ausdehnungskörpers ist mit dem Heißwasserzulauf wärmeleitmäßig verbunden (4). Der Luftdurchtritt wird durch einen Schieber (6) gesteuert. Der Schieber ist mit einem elektrischen Antrieb (7) verbunden. Wird der Luftdurchtritt verhindert indem der Schieber die Luftdurchtrittsöffnungen verdeckt, so heizt sich das Gehäuse des Ausdehnungskörpers über die Wärmeleitung (4) auf und das Ventil schließt bis auf einen geringen Wert. Eine geringe Öffnung ist erforderlich, damit die hohe Temperatur des Gehäuses erhalten bleibt.

Das elektrische Regelsystem besteht aus einem Operationsverstärker (8), der als Vergleicher geschaltet ist. Entsprechend der Differenz des Signals eines Raumthermostaten (9) und eines Sollwertes (10) steuert er den elektrischen Antrieb (7) des Schiebers (6). Der elektrische Antrieb kann eine Galvanometerspule sein oder z. B. durch Schrittschaltmotor gesteuert sein. Die Temperatursollwerte (10) werden für die verschiedenen Zeitintervalle vorgegeben. Die Zeitintervalle werden mittels einer Schaltuhr (11) mit Kontakten (12) für die Sollwerte vorgegeben.

Der Energieverbrauch des Systems ist gering. Der Stromverbrauch einer Quarz-Schaltuhr kann von einer Mignon-Batterie für mehr als ein Jahr gedeckt werden. Der elektrische Regelkreis kann über die Schaltuhr intervallmäßig ein- und ausgeschaltet werden, wobei die Schieberstellung stets in der zuvor angesteuerten Position verharrt. Dadurch wird der zusätzliche Stromverbrauch unbedeutend höher.

0068478

SYSTEM ZUR REGELUNG UND REGISTRIERUNG VON HEIZENERGIE

Patentansprüche

1. Verfahren zur Regelung von Ventilen, dadurch gekennzeichnet, daß die zur Stellung des Ventilschiebers notwendige Energie bzw. Kraft aus der Temperaturdifferenz zwischen dem Heizmedium (Heißwasser, Heißluft) und der Raumtemperatur gewonnen wird, indem durch ein nahezu kraftlos steuerbares Wärmeleitsystem (6) oder (4) dafür gesorgt wird, daß sich der Ausdehnungskörper (1) aufheizen oder abkühlen kann.

2. Steuerbares Wärmeleitsystem (6) bzw. (4) dadurch gekennzeichnet, daß die Abkühlung des Steuerkörpers (1) durch unterschiedliche Raumluftmengen bewirkt wird.

3. Steuerung nach Anspruch 2 dadurch gekennzeichnet, daß ein Schie- ·ber Luftdurchlaßöffnungen unterschiedlich weit verschließt.

4. Steuerung nach Anspruch 2 dadurch gekennzeichnet, daß eine rotationssymmetrische Walze mit Luftschlitzen durch Verdrehen die Luftdurchströmung verändert.

5. Steuerung nach Anspruch 2, gekennzeichnet dadurch, daß die Größe der Wärmeleitung (4) vom Heizmedium zum Steuerkörper verändert wird.

6. Veränderung der Wärmeleitung nach Anspruch 5 dadurch gekennzeichnet, daß der Querschnitt des Wärmeleitungspfades durch flüssige Metalle verändert wird.

0068478

7.  Steuerung des Wärmeleitsystems nach Anspruch 2 und 5 dadurch gekennzeichnet, daß der Antrieb des Abkühl- oder Aufheizsystems aus einer elektrisch drehbaren Spule besteht.

8.  Steuerung des Wärmeleitsystems nach Anspruch 2 und 5 dadurch gekennzeichnet, daß der Antrieb des Abkühl- oder Aufheizsystems durch einen Schrittschaltmotor mit oder ohne Getriebe erfolgt.

9.  Steuerung des Wärmeleitsystems nach Anspruch 3 und 5 dadurch gekennzeichnet, daß der Antrieb des Abkühl- oder Aufheizsystems durch einen Linearmotor erfolgt.

10. Steuerung des Wärmeleitsystems nach Anspruch 2 und 5 dadurch gekennzeichnet, daß der Antrieb des Abkühl- oder Aufheizsystems durch eine Tauchspule erfolgt.

11. Steuerung des Wärmeleitsystems nach Anspruch 2 und 5 dadurch gekennzeichnet, daß der Antrieb des Abkühl- oder Aufheizsystems durch einen Elektromagneten erfolgt.

12. Regelsystem, dadurch gekennzeichnet, daß im kompletten Heizkörperregelsystem eine quarzgesteuerte Schaltuhr enthalten ist.

13. Steuerung von Temperatursollwerten, dadurch gekennzeichnet, daß die nach Anspruch 12 beschriebene Schaltuhr über Kontaktbahnen oder Schaltreiter einstellbare Widerstände oder Ziffernschalter schaltet.

14. Wärmemengenmeßsystem, dadurch gekennzeichnet, daß die Temperatur am Heizkörper mittels Fühler gemessen und mit der Raumtemperatur (Fühler 9) verglichen, elektrisch über die Zeit integriert wird und die so ermittelte Wärmemenge mit einem Schrittschaltmotor

0068478

angetriebenen Zähler registriert wird. Dieser Zähler kann
eine handelsübliche Quarzuhr sein oder aus einem Zeigersystem bestehen, das durch zeitgesteuerte Kupplung mit der
Schaltuhr angetrieben wird. Die Dauer der Kupplung entspricht
in diesem Fall der verbrauchten Wärmemenge.

0068478

Fig. 1

EP 82 10 5715

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-B-1 064 267 (DRÄGERWERK)<br>* Insgesamt *<br><br>--- | 1 | G 05 D 23/12 |
| A | DE-A-2 104 784 (SAMSON APPARATEBAU)<br>* Seite 5, Zeile 16 - Seite 9, Zeile 11; Figur 1 *<br><br>--- | 1 | |
| A | DE-A-2 303 097 (ZENTRA ALBERT BÜRKLE)<br>* Seite 10, Zeile 17 - Seite 12, Zeile 11; Figuren 2,3 *<br><br>----- | 1 | |

|  |
|---|
| **RECHERCHIERTE SACHGEBIETE (Int. Cl. ³)**<br><br>G 05 D |

Der vorliegende Recherchenbericht wurde für alle Patentansprüche erstellt.

| Recherchenort | Abschlußdatum der Recherche | Prüfer |
|---|---|---|
| DEN HAAG | 01-10-1982 | HOUILLON J.C.P.L. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82